# EUROPEAN PATENT SPECIFICATION

(11) **EP 0 882 309 B1**
(45) Date of publication and mention of the grant of the patent: **24.04.2002**
(21) Application number: 97946693.5
(22) Date of filing: 31.10.1997
(51) Int. Cl.: H01M 4/24, H01M 4/42, H01M 4/06, H01M 4/12

(54) **ZINC ANODE FOR AN ELECTROCHEMICAL CELL**
ZINKANODE FÜR ELEKTROCHEMISCHE ZELLE
ANODE DE ZINC POUR CELLULE ELECTROCHIMIQUE

(30) Priority: 01.11.1996 US 742547
(43) Date of publication of application: 09.12.1998
(73) Proprietor: Eveready Battery Company, Inc., Westlake, Ohio 44145-0616 (US)
(72) Inventor: URRY, Lewis, F., Elyria, OH 44039 (US)
(74) Representative: Lord, Hilton David
(86) International application number: PCT/US97/21225
(87) International publication number: WO 98/20569

(56) References cited:
- EP-A- 0 555 978
- GB-A- 2 028 569
- PATENT ABSTRACTS OF JAPAN vol. 010, no. 275 (E-438), 18 September 1986 & JP 61 096665 A (MATSUSHITA ELECTRIC IND CO LTD), 15 May 1986,

## Description

This invention relates to zinc anodes for electrochemical cells, particularly aqueous alkaline electrochemical cells, and more particularly to zinc anodes comprising zinc flakes.

Alkaline cells have mercury added to the zinc anode to enhance the current collecting effect by increasing contacts between zinc particles per se, and between zinc particles and current collectors. However, when mercury was removed from the zinc due to environmental concerns, performance and quality decreased. Removing mercury from alkaline batteries impaired their leakproof characteristics, shock resistance characteristics, and discharge characteristics.

Many different approaches have been undertaken to overcome these problems. To alleviate the leakage problems associated with hydrogen gas generation, zinc alloy powders were produced with the addition of new metallic elements such as indium, bismuth, lead, aluminium and others. The problems of shock and vibration sensitivity were improved by the addition of gelling agents to the anode (such as carboxymethylcellulose, sodium polyacrylate, polyacrylic acid, for example). The gelling agents act to improve and increase the contact points and positional stability of the zinc particles. By using these gelling agents, the viscosity of the gel negative electrode increases to suppress the movement of the zinc particles. For example, EP-A-678927 teaches the use of three crosslinked gelling agents in combination for inhibiting vibration and improving shock resistance. This can impair the discharge characteristics due to a poor reaction efficiency of the zinc and due to a reduction in the electrical capacity ratio. JP-A-7254405 teaches using a gelled negative electrode comprising non-amalgamated zinc powder in the shape of balls and long slender elements to increase the contact points for improved dischargeability and flowability of the anode gel.

Due to the limited size of a battery's internal volume, battery manufacturers have been limited in the amount of active materials that can be packed into the cell. In order to provide the maximum electrochemical activity with a minimum of limiting polarization, it is desirable to operate a battery at as low a current density on the active materials as possible while still producing the required amount of total current from the system. Accordingly, alkaline batteries conventionally employ electrodes made from powdered active materials so as to obtain the highest possible surface area per unit weight or volume and thus minimize current density. In the prior art, the minimum amount of zinc powder in a mercury-free anode needed in order to efficiently match the cathode's electrochemical potential has been no less than about 28 volume percent. Using higher amounts of zinc would unnecessarily waste zinc and restrict the space around each zinc particle, thus limiting the cell's solid reaction product capacity. A higher zinc content can therefore result in a decreased high rate service performance. Using lower amounts of zinc powders results in decreased electrochemical output and decreased voltage stability due to insufficient particle-to-particle and particle-to-collector contact.

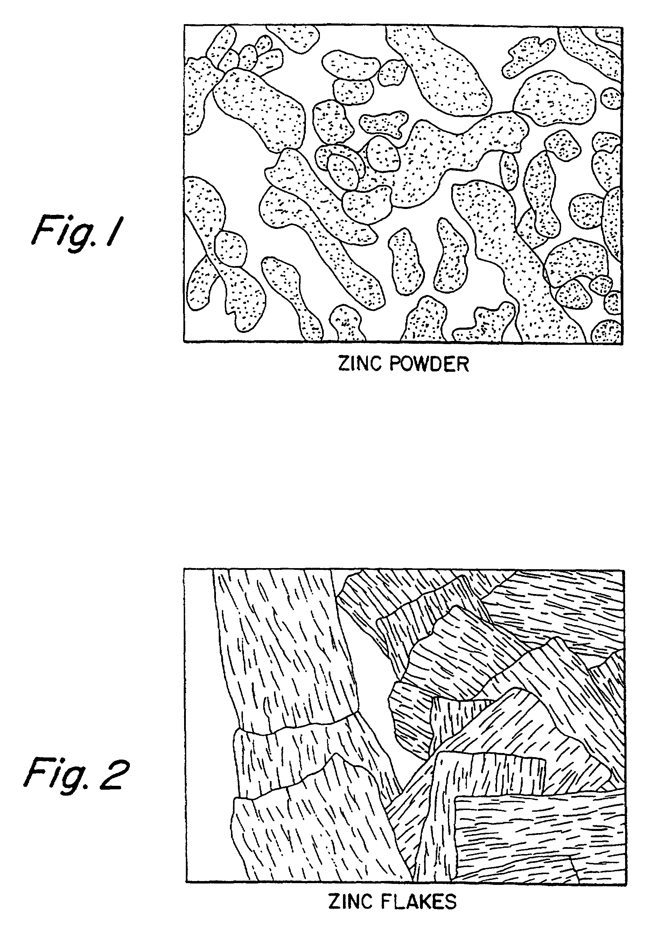

Conventional zinc powders, as shown in Figure 1, are characterized as irregularly shaped particles, ranging from lumpy or distorted spheroids, to elongated tuberous forms. These particles frequently possess craggy, or minor protrusions, and irregular surface characteristics. The average surface area of these particles can be about 37 cm² per gram of zinc. These conventional zinc powders are produced by air jet atomization of molten zinc.

A particle's dimensions can be described in a three dimensional system by its length, width, and thickness. The aspect ratio of any particle is the ratio of its length to its width. Depth is another important dimension . The depth determines the minimum size sieve opening through which the particle will pass. The depth is not necessarily perpendicular to either the width, thickness, or the length. For a typical battery grade zinc powder, the median depth, as determined by sieving, is approximately 100 to 300 µm. However, the extremes range from 20 µm to 1000 µm. Typical powders, as analyzed by scanning electron microscopy, have a depth that is nearly the same as the width, and have aspect ratios of approximately 2 (i.e., the particles are near spherical to elongated shapes). In conventional zinc powders, the ratio of the largest to the smallest lateral dimension is typically between about 1:1 to 10:1.

The zinc flakes of the present invention, while having these dimensions, do not necessarily need to be in a planar orientation. The flakes can also be distorted with turned-in corners, buckled in the middle or otherwise shaped.

US-A-4,743,185 teaches the use of compressed zinc powders for the purpose of suppressing hydrogen gassing in amalgamated and non-amalgamated anodes, and teaches that zinc powders including zinc flakes can be used in anodes only when they are compacted to bulk densities of at least 6.5 g/cc.

US-A-5,283,139 teaches anodes with zinc volume percents ranging from 17.37 to 25.21. However, these low zinc concentrations were enabled by the use of mercury to increase conductivity between the zinc particles.

Nonetheless, until now, the use of conventional zinc powders has required no less than 28 volume percent of zinc in mercury-free anodes to provide sufficient electronic conductivity. Accordingly, it would be desirable to provide a zinc anode that enables significantly lower amounts of zinc to be used in a mercury-free anode, while still maintaining an adequate current carrying matrix and good conductivity, that enables improved high current discharge efficiency, and that solves the problem of shock and vibration sensitivity.

An object of the present invention is to provide an electrochemical cell having an anode comprising zinc flakes.

A further object of the present invention is to provide an electrochemical cell comprising an anode using zinc flakes in which the flakes are non-compacted and uniformly incorporated within the anode.

A further object of the present invention is to provide an electrochemical cell with an anode in which zinc flakes are homogeneously dispersed within the anode either throughout the anode volume or within a concentrated anode volume produced by gel microstructures or gel nuggets.

A further object of the present invention is to provide an electrochemical cell comprising a mercury-free zinc anode in which the zinc concentration is minimized, having less than 27 percent zinc by volume in the anode, or between 0.36 grams/cc to about 1,56 grams/cc of zinc density.

Further objects of the present invention will be made apparent from the following description and the appended claims.

Accordingly, the present invention provides an electrochemical cell having a mercury-free anode comprising non-compacted zinc flakes, the zinc flakes having thickness, length, and width dimensions, the thickness dimension being at least 10 times smaller than the length and width dimensions, the zinc flakes having an average surface area of about 30 cm² to about 150 cm² per gram. The purpose of the zinc flakes is to provide a mercury-free zinc anode having zinc concentrations less than 27 percent by volume. Alternatively, the zinc anode can have zinc concentrations less than 28 percent by volume when the zinc anode includes the zinc flakes. Stated another way, the electrochemical cell can include a mercury-free zinc anode wherein the zinc content in the anode has densities between about 0.36 grams/cc to about 1.56 grams/cc, by weight of zinc to anode volume. The zinc flakes of the present invention have an average surface area ranging from about 75 centimeters squared to about 150 centimeters squared per gram.

As stated, the electrochemical cell of the present invention comprises non-compacted zinc flakes. In the electrochemical cell of the present invention, zinc flakes are uniformly incorporated within the anode. The zinc flakes can be either homogeneously dispersed throughout the anode or can be homogeneously dispersed within a concentrated anode volume produced by gel microstructures or gel nuggets.

Zinc flakes of the present invention, of course, include a thickness, length and width dimension. The thickness dimension of each zinc flake is at least ten times smaller than its length and width dimensions. An electrochemical cell of the present invention can also include zinc powder. However, it is preferred that the zinc flakes comprise from about 5 to about 70 weight percent of the total combined weight of the zinc flakes and the zinc powder. It is most preferred that the zinc flakes comprise from about 5 to about 30 weight percent of the total combined weight of the zinc flakes and the zinc powder. The electrochemical cell of the present invention includes zinc flakes composed of pure zinc. Alternatively, the zinc flakes can comprise a zinc alloy. If the zinc flakes comprise pure zinc or an alloy, the zinc flakes can be coated or surface deposited with indium. The zinc alloy can comprise one or more of the metals selected from the group consisting of indium, bismuth, lithium, calcium, or aluminium.

The electrochemical cell of the present invention preferably includes an alkaline electrolyte, which is dispersed throughout the electrochemical cell contacting both the zinc-filled anode and a cathode including manganese dioxide. Of course, the present invention is not limited to this particular type of electrochemical cell. However. a AA size cell of this alkaline type with zinc flakes has demonstrated at least ten minutes of 2000 milliampere constant current in a 21°C room, from its initial voltage down to a voltage of 0.90 volts.

Figure 1 is an electron photomicrograph of the prior art conventional zinc powder, as used in aqueous alkaline cells. showing the characteristically irregular particle shapes and sizes.

Figure 2 is an electron photomicrograph of zinc flakes as used in the present invention.

Figure 3 is a plot of a voltage profile (voltage vs. A.h per gram zinc) of an IEC pulse test to 0.9 volts series comparing cells containing anodes employing zinc powder to cells containing anodes employing zinc flakes.

Figure 4 is a plot of a voltage profile of a 3.9 ohm continuous discharge test comparing cells comprising an anode of conventional zinc powder to cells comprising an anode with 10 percent of the zinc as flakes with the remainder as powder.

Figure 5 is a plot of a voltage profile (voltage vs. A.h per gram zinc) of a 2000 milliamp test to 0.90 volts of comparing cells employing an anode of all zinc powder to cells employing an anode of 20% by weight flakes and the remainder zinc powder.

Figures 6A, 6B and 6C show cross-sections of alkaline manganese dioxide-zinc cells, illustrating a homogeneously dispersed zinc powder anode, a concentrated zinc powder anode, and a homogeneously dispersed zinc flake anode, respectively.

Referring now to Figure 2, there are shown zinc flakes typical of those of the present invention. A flake is a relatively small, thin particle having high surface area per gram, with a thickness, length, and width dimension. The thickness is substantially smaller than any other dimension. The flakes can have varying shapes, such as scale-like or chip-like layers of zinc, having various geometries such as discs, squares, troughs, triangles, rhomboids, rectangles, and the like. The zinc flakes may also have various configurations. For example, the flakes can be flat, bent, curled, or otherwise shaped or configured. The desired configurations can be selected based on processability or other optimizing characteristics.

Typically, the thickness of the flakes is at least 10 times smaller and preferably at least 20 times smaller, and most preferably at least 80 times smaller, than the next smallest dimension of either width or length. In practice, largely to maintain the ability of a bed of such particles to flow, the ratio of the next smallest dimension to the thickness is preferably in the range of about 20:1 to about 80:1. The applicants have discovered that the thinnest particle produces the best current density. Therefore, the preferred ratio is about 80:1. Zinc flakes which have provided favourable current densities have thicknesses of 25 µm (0.001 inch), with an average length of 610 µm (0.024 inch) and width of 610 to 1020 µm (0.024 to 0.040 inches). However, the invention is not limited to zinc flakes of these dimensions.

The average surface area of flakes can range from about 30 cm² to about 150 cm² per gram. The flakes used in the present invention preferably have an average surface area of 121 cm² per gram of zinc. Thus, the surface area for flakes can be on the average of a 300% increase per grain compared to typical powders, providing a good contact mechanism. Increasing the surface area in this magnitude lowers the current density to one-third for the same input of zinc. Surface areas of flakes can be measured by scanning electron microscopy. The tap density or bulk density of the zinc flakes in this invention is 0.82 g/cc, as compared to 3.05 g/cc for conventional zinc powders. Table 1 shows tap density, average thickness, and average surface area comparisons of conventional zinc powders (and other zinc forms known in the art) to zinc flakes of this invention.

**TABLE 1**

| **Material** | **Tap Density** **(g/cc)** | **Thickness** **(µm)** | **Surface Area** **(cm**^{**2**}**/g)** |
|---|---|---|---|
| Flakes | 0.82 | 25 | 121.3 |
| 1230 Zinc Powder | 3.05 | 180 | 37.0 |
| Needles | 3.19 | 320 | 19.7 |
| Spheres | 4.23 | 316 | 26.6 |

The flake materials in the present invention can be obtained from available sources, or may be manufactured using processes described in US-A-4,154,284, US-A-4,242,069, and US-A-4,215,084. One way of producing zinc flakes is by the rapid solidification technology in which metal flakes are produced using a metal spinning process. A molten metal stream is channeled into a thin, liquid stream and directed to contact a chilled spinning block producing the zinc flake. This process is commercialized and practiced by the Transmet Corporation of Columbus, Ohio. Other rapid solidification techniques include a rotating extracting disk which extracts the molten metal from a bath and propels it through an inert atmosphere producing the zinc flake. Although these methods are adequate in producing the zinc flakes of the present invention, the invention is not restricted to these methods.

The zinc flakes can be comprised of pure zinc defined as unalloyed zinc, or of zinc alloys such as bismuth-indium-calcium, bismuth-aluminium, bismuth-indium, bismuth-indium-aluminium, or others. The zinc powder can be independently comprised of pure zinc or a zinc alloy. That is, the zinc powder and the zinc flakes need not be made of the same zinc composition. However, the composition of the zinc flake can be any percent composition known or unknown for powders. The composition of the zinc flakes used in the preferred embodiments are: 500 ppm Pb alloy; bismuth-indium-calcium alloy (bismuth 250 ppm, indium 250 ppm, calcium 150 ppm); or, bismuth-indium-aluminium alloy (bismuth 250 ppm, indium 250 ppm, aluminium 80 ppm), although other alloys are of course feasible. In another preferred embodiment, indium can be coated on the alloys in an amount of 10-500 ppm, preferably between 20-200ppm. The composition of the zinc powder in the present invention is not critical to the invention, and any zinc or zinc alloy composition known for use in batteries may be used to form the zinc flakes employed in the present invention.

The anode gel according to this invention is a homogeneous mixture of an aqueous alkaline electrolyte, a gelling agent being composed mainly or solely of a crosslinked polyacrylic acid, and a combination of zinc powder and thin zinc flakes as main components. The aqueous alkaline electrolyte can be an alkaline metal hydroxide such as sodium hydroxide, potassium hydroxide, and the like, or mixtures thereof. Potassium hydroxide is preferred. The gelling agent that can be used in this invention can be a crosslinked polyacrylic acid such as Carbopol® 940, carboxymethylcellulose, polyacrylamide, sodium polyacrylate, or other agents that are hydrolyzable in alkaline electrolyte solution. The zinc powder and/or zinc flakes may be pure zinc, or an alloy comprising an appropriate amount of one or more of the metals selected from the group consisting of indium, lead, bismuth, lithium, calcium, aluminum, with the balance being zinc. Pure zinc or any combination of alloy compositions may be used for the powders and flakes. The flakes can be present in an amount between about 5 percent by weight to about 70 percent by weight of the total zinc concentration, with the remainder being conventional zinc powder. The order of addition and the methods of mixing the components are not critical to this invention. However, it is important the mixing of the components results in the uncompacted homogeneous distribution of flakes throughout the mercury-free anode.

The gelling agent of the present invention may also comprise gel "nuggets" which are gel microstructures swelled with electrolyte. Such "nuggets" are known in the prior art and act to concentrate the zinc by moving each zinc particle into relatively closer relation with adjacent zinc particles. Although the zinc particles are homogeneously distributed in the anode space around the "nuggets," they, of course, do not occupy the same space with the "nugget" and, therefore, are homogeneously dispersed within a concentrated anode volume. However, the presence of "nuggets" or the composition of, or the distribution of the zinc within, the anode gel is not critical to the invention and any anode gel composition may be employed.

Other components such as gassing inhibitors, organic or inorganic anticorrosive agents, binders, surfactants, or others, may be optionally added, simultaneously or separately, directly to the dry zinc mixture, or may alternatively be added to the electrolyte or gelled electrolyte before blending. Examples of gassing inhibitors or anticorrosive agents include indium salts (such as indium hydroxide), perfluoroalkyl ammonium salts, and alkali metal sulfides. Examples of surfactants include polyethylene oxide, polyoxyethylene alkylethers, and perfluoroalkyl compounds.

It has been found that the use of a mixture of zinc flakes and zinc powder provides the preferred composition because the mixture in a gel material has better flow characteristics for assembly purposes than just zinc flakes in the gel material. It has been found that anode gels using zinc flakes having a zinc content as low as 9 volume percent in the anode gel perform satisfactorily. Presently, a combination zinc ratio of 20% zinc flake/80% zinc powder is preferred. The ratio can vary depending on flowability and packability characteristics. Generally, the ratios can also vary based on the particles' shape and configuration. It is desired that the combined ratio will have a mass matching the electrochemical potential of the MnO₂ in the cathode. Mixtures within the range of from about 5 to about 70 weight percent of the zinc as flake, depending on the shape and the configuration, with the remaining percentage of the zinc as powder, do permit excellent filling of the anode cavity, provide sufficient total zinc and surface-accessible zinc, and support the above-mentioned advantageous results including insensitivity to shock and vibration. In a preferred embodiment, the zinc flakes can comprise about 20 weight percent of the total zinc weight. For levels above 70 weight percent, flowability may be lowered. For concentrations lower than 5 weight percent, surface area and particle-to-particle and particle-to-collector contact may be too low. The zinc content in the anode gel using this invention should be between about 0.36 grams and 1.56 grams of zinc per cm³ of anode gel volume.

The anode gel can be prepared by (1) mixing a solution of the electrolyte with the zinc before, after, or concurrently with dissolution of the gel material therein -- the zinc flakes comprising about 5 to about 70 weight percent of zinc and the remainder of the zinc in the form of conventional zinc powder, the powder being a mixture of irregularly shaped particles, having particle size distributions ranging from 20-1000 µm and averaging approximately 200 µm, with an aspect ratio range of 1 to 7 and an average aspect ratio range of 2 in the xy, yz and xz vectors; and (2) mixing thoroughly to uniformly incorporate the zinc forms; and then (3) shaping or flowably shaping the resulting anode gel material to form an anode for an electrochemical cell, which contains uncompacted zinc flakes homogeneously distributed throughout.

In a preferred embodiment of this invention, a zinc anode gel having 25 volume percent zinc can be prepared using a mixture of zinc flakes, zinc powder, potassium hydroxide, and indium hydroxide. The zinc flakes are present at 20 weight percent of the total weight of the combination of zinc powder and zinc flakes, with the remainder being conventional zinc powder (Big River Zinc 1230). Both the flakes and the powder are zinc alloys comprising 500 ppm lead, and are surface-coated or surface-deposited with indium. The zinc combination is mixed with pre-gelled electrolyte, comprising a combination of 35 weight percent of anode gel of 38.5% aqueous potassium hydroxide, 0.6 weight percent Carbopol® 940, 0.05 weight percent sodium silicate as binder, and 1.0 weight percent zinc oxide.

In another preferred embodiment of this invention, a zinc anode gel having 9 volume percent zinc is prepared using only zinc flakes. The flakes are a zinc alloy comprising 500 ppm lead, and surface-coated or deposited with indium. The zinc flakes are mixed with the pregelled electrolyte, comprising about 63 weight percent of 38.5% aqueous potassium hydroxide, 1.1 weight percent Carbopol® 940, 0.1 weight percent sodium silicate as binder, and 1.9 weight percent zinc oxide.

### EXAMPLE 1

Two test lots of alkaline cells are constructed comparing anode gels made with zinc flakes with control gels made with conventional zinc powders. Pure zinc was used in both test lots. The test anode gel is made by mixing 9 volume percent zinc flakes, having an average dimension 610 x 610 x 25 µm (0.024 x 0.024 x 0.001 inch) with gelled electrolyte solution. The gelled electrolyte solution comprises about 0.6 weight percent crosslinked polyacrylic acid (Carbopol® 940) and the balance being 38 % aqueous potassium hydroxide. The anode volume is measured as the volume enclosed in the space between the inside surface of the separator to the collector, and the inside surface of the separator at the bottom of the anode to the top of the anode. Control AA cells containing 9 volume percent zinc powder in the anode are similarly constructed. The resulting cells are tested for short circuit amperage. Whereas the control AA cells have a short circuit amperage of 0.2 amperes, the flake AA cells produce 16 amperes of current. Thus, the cell with the zinc flakes demonstrate a greatly improved current carrying efficiency per gram of zinc over zinc powder anode cells.

### EXAMPLE 2

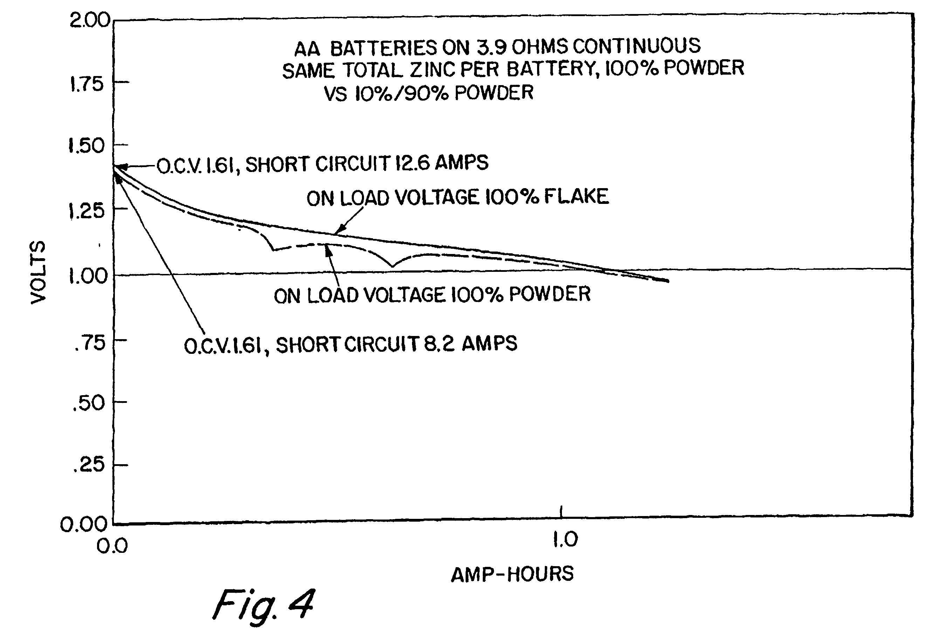

In this example, zinc flakes of average flattened dimension 610 x 610 x 25 µm (0.024 x 0.024 x 0.001 inch) are combined with conventional zinc powder in gelled electrolyte, as described above in Example 1. Pure zinc was used. The total amount of zinc in the gel is 63 weight percent, which is equivalent to 25.2 volume percent. Of this total amount of zinc, 10% by volume of this zinc is comprised of zinc flakes, the remainder being zinc powder. The resulting cells are discharged continuously at 3.9 ohms load. As shown in Figure 4, the cells with the zinc flakes have higher short circuit amperages than the controls, and smooth discharge curves compared to erratic discharge for the controls. This demonstrates that with the flakes, there is better electron conductivity. The cells with the flakes also have 90 more minutes of discharge to the sudden decrease in voltage, due to the higher total zinc surface area of the cell with zinc flakes.

### EXAMPLE 3

In this example, pure zinc gel anodes containing a total of 9 volume percent zinc, all in the form of flakes, is incorporated into AA cells. Control AA cells contained 28.3 volume percent zinc, all in the form of powder. The flake and control AA cells are tested for operating voltage performance on a 1.8 Ω IEC pulse test in which a 1.8 Ω load is alternately connected to the cell terminals for 15 seconds and disconnected for 45 seconds. The results show that, during the useful life of the cells defined as the period during which the cells maintained a voltage above 0.9 volts, the flake AA cells maintain an average operating voltage of approximately 1.09 volts, with the control cells at about 0.965 volts. Thus, with less than one-third the volume of zinc, the flake anode cells maintain approximately 13% more voltage than the control cells during their useful life, clearly outperforming the controls, yet with markedly increased efficiency.

### EXAMPLE 4

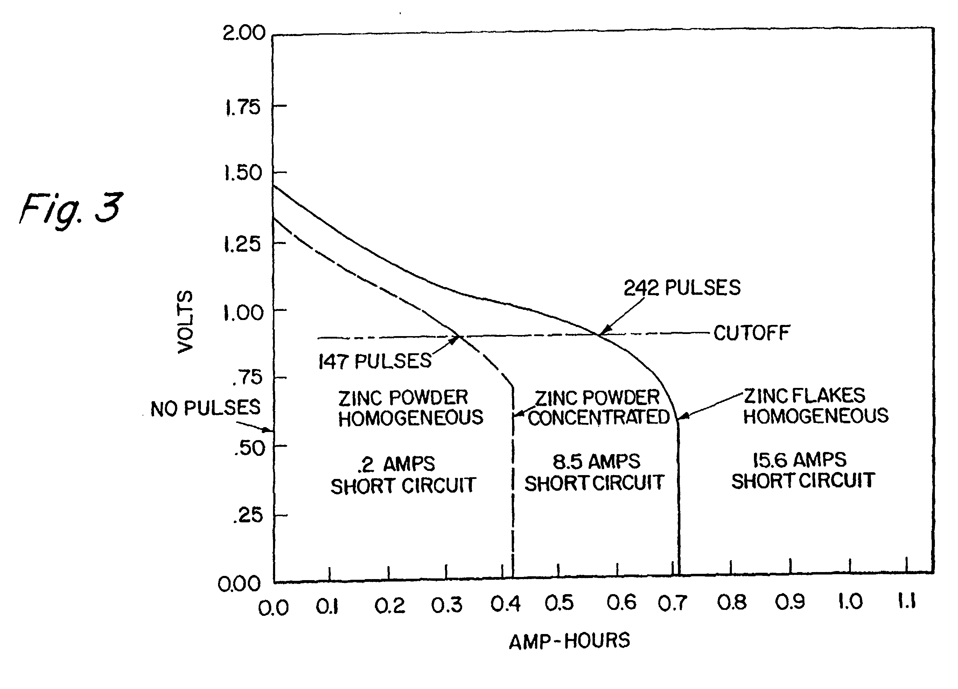

Figure 3 is a graph comparing cells having 9 volume percent conventional pure zinc powder, 9 volume percent concentrated pure zinc powder, and 9 volume percent pure zinc flakes.

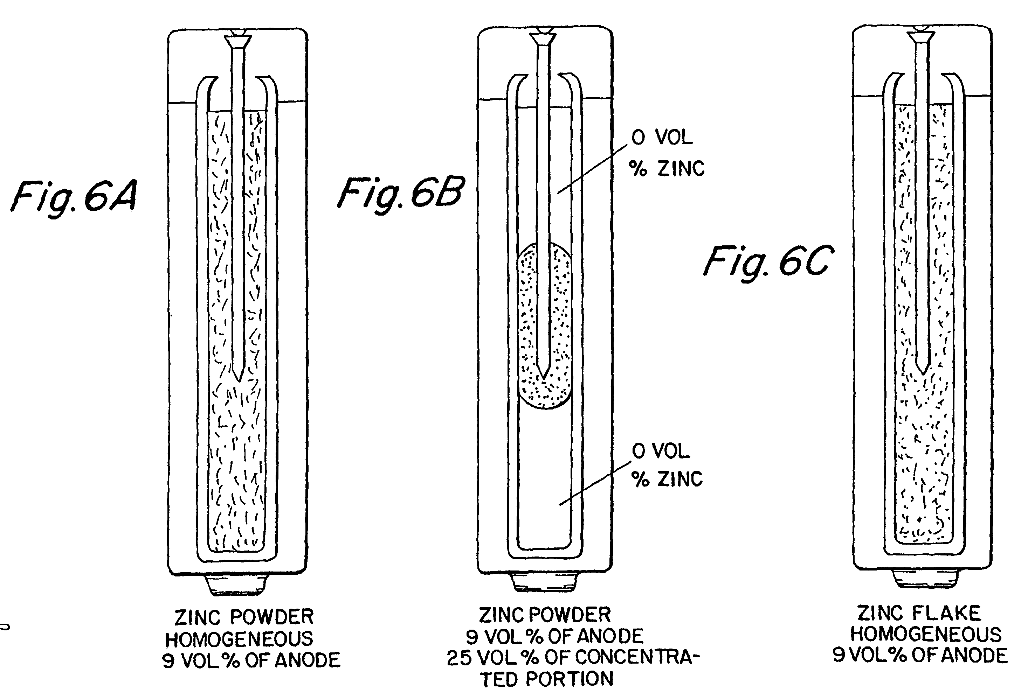

A zinc anode gel having 9 volume percent zinc as only conventional zinc powder (Big River Zinc 1230) is prepared by homogeneously mixing the indium-coated zinc powder with the pre-gelled electrolyte solution, and incorporating into a AA size cylindrical alkaline cell. A second zinc anode gel having 9 volume percent zinc as only conventional zinc powder (Big River Zinc 1230) is prepared by mixing the zinc powder with the pre-gelled electrolyte solution, then incorporating the anode gel into a AA size cylindrical alkaline cell, concentrated to 25 volume percent near the collector for electrical contact. This second cell is depicted in Figure 6B. A third anode gel having 9 volume percent zinc, entirely as zinc flakes, is prepared by homogeneously mixing the zinc flakes with the pre-gelled electrolyte solution. This third cell construction is depicted representationally in Figure 6C. The construction of these three cells are illustrated by the three cell constructions depicted in Figures 6A, 6B and 6C.

Open circuit voltages and short circuit amperages are measwed on the three types. All three types have the same open circuit voltage, but a large difference in amperages: 0.2 amperes for the homogeneous powder, 8.5 amperes for the concentrated powder, and 15.6 for the homogeneous zinc flakes. The test is a high rate pulse for these cells, consisting of 1.8 ohms, 15 seconds on and 45 seconds off, at 21 °C to a cut-off of 0.90 volts.

The cell having the homogeneously dispersed powder was below cutoff on the first pulse, as indicated by the dot-dash curve. The cell having the zinc powder concentrated exhibits 147 pulses to the cut-off as shown by the dash curve. The cell having the homogeneously dispersed zinc flakes exhibits 242 pulses to the cut-off voltage, as shown by the solid line curve. These results evidence that zinc flakes provide better performance than the powder, even when the zinc powder has been concentrated to offset the poorer particle-to-particle electrical matrix compared to the flakes.

### EXAMPLE 5

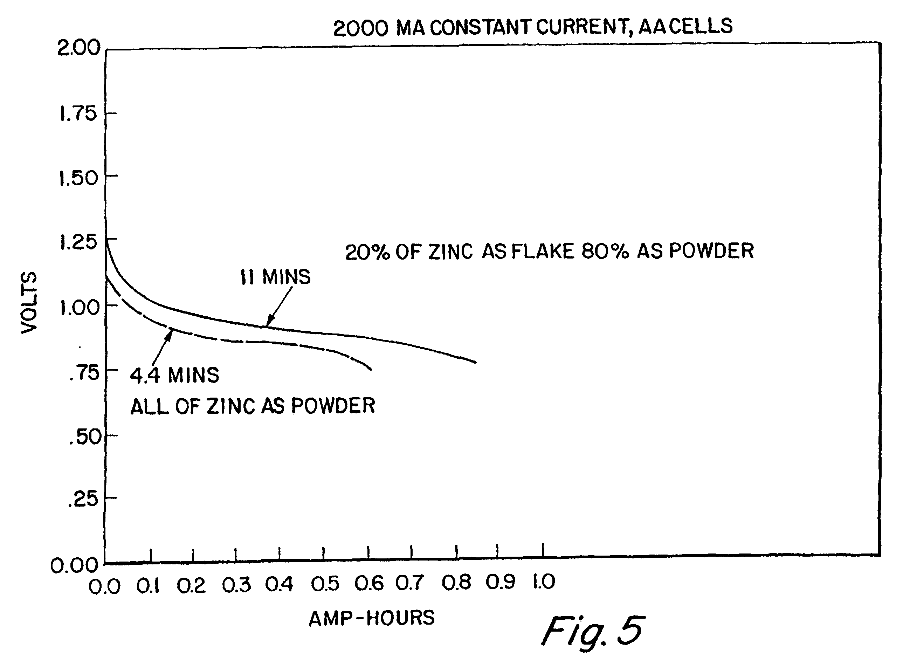

Figure 5 is a graph comparing the performance results of two alkaline cells, having 25 volume percent pure zinc, at a constant current drain of 2000 milliamperes for AA size cylindrical alkaline cells. One cell was a control, having all the zinc as pure zinc powder, and the other cell substituted 20 weight percent of the powder with 610 x 610 x 25 µm (0.024 x 0.024 x 0.001 inch) pure zinc flakes. The test is 2000 milliamperes constant current in a 21 °C room to 0.90 volts. As can be seen by the voltage profiles, the cell having all the zinc as powder exhibits 4.4 minutes to 0.90 volts while the one with 20% of the zinc as square flakes exhibits 11.0 minutes to 0.90 volts. Employing the zinc flakes thus shows a significant improvement on high rate discharge.

## Claims

1. An electrochemical cell having a mercury-free anode comprising non-compacted zinc flakes, the zinc flakes having thickness, length, and width dimensions, the thickness dimension being at least 10 times smaller than the length and width dimensions, the zinc flakes having an average surface area of about 30 cm² to about 150 cm² per gram.

2. An electrochemical cell according to claim 1, wherein the zinc flakes are uniformly incorporated within the anode.

3. An electrochemical cell according to any preceding claim, wherein the zinc flakes are homogeneously dispersed within the anode.

4. An electrochemical cell according to any preceding claim, wherein the zinc flakes are homogeneously dispersed within a concentrated anode volume.

5. An electrochemical cell according to any preceding claim, wherein the zinc flakes are formed from pure zinc.

6. An electrochemical cell according to any of claims 1 to 4, wherein the zinc flakes are formed from a zinc alloy.

7. An electrochemical cell according to claim 6, wherein the zinc alloy comprises one or more of the metals selected from indium, bismuth, lithium, calcium, and aluminium.

8. An electrochemical cell according to any preceding claim, wherein the zinc flakes are coated or surface deposited with indium.

9. An electrochemical cell according to any preceding claim, wherein the zinc flakes have an average surface area of about 75 cm² to about 150 cm² per gram.

10. An electrochemical cell according to any preceding claim, wherein the anode further comprises zinc powder.

11. An electrochemical cell according to claim 10, wherein the zinc flakes comprise from about 5 to about 70 weight percent, preferably from about 5 to about 30 weight percent, of the total combined weight of the zinc flakes and the zinc powder.

12. An electrochemical cell according to any preceding claim, wherein the electrochemical cell comprises an alkaline electrolyte.

13. An electrochemical cell according to any preceding claim, wherein the anode has a zinc concentration of less than 28 percent by volume, preferably less than 27 percent by volume.

14. An electrochemical cell according to claim 13, wherein the cell is an a "AA" size alkaline cell and the cell demonstrates at least 10 minutes of 2000 milliampere constant current in a 21 °C room to 0.90 volts.

15. An electrochemical cell according to claim 1, wherein the zinc content in the anode is between about 0.36 grams per cc to about 1.56 grams per cc, of zinc to anode volume.

## Patentansprüche

1. Elektrochemische Zelle mit einer quecksilberfreien Anode, die unverdichtete Zinkflocken aufweist, wobei die Zinkflocken Dicken-, Längen- und Breitenabmessungen aufweisen, wobei die Dickenabmessung mindestens 10 mal kleiner als die Längen- und Breitenabmessungen ist, wobei die Zinkflocken eine mittlere spezifische Oberfläche von etwa 30 cm² bis etwa 150 cm² pro Gramm aufweisen.

2. Elektrochemische Zelle nach Anspruch 1, wobei die Zinkflocken innerhalb der Anode gleichmäßig eingelagert sind.

3. Elektrochemische Zelle nach einem der vorstehenden Ansprüche, wobei die Zinkflocken innerhalb der Anode homogen dispergiert sind.

4. Elektrochemische Zelle nach einem der vorstehenden Ansprüche, wobei die Zinkflocken innerhalb eines konzentrierten Anodenvolumens homogen dispergiert sind.

5. Elektrochemische Zelle nach einem der vorstehenden Ansprüche, wobei die Zinkflocken aus reinem Zink bestehen.

6. Elektrochemische Zelle nach einem der Ansprüche 1 bis 4, wobei die Zinkflocken aus einer Zinklegierung bestehen.

7. Elektrochemische Zelle nach Anspruch 6, wobei die Zinklegierung ein oder mehrere Metalle aufweist, die unter Indium, Bismut, Lithium, Calcium und Aluminium ausgewählt sind.

8. Elektrochemische Zelle nach einem der vorstehenden Ansprüche, wobei die Zinkflocken mit einem Überzug oder Oberflächenbelag aus Indium beschichtet sind.

9. Elektrochemische Zelle nach einem der vorstehenden Ansprüche, wobei die Zinkflocken eine mittlere spezifische Oberfläche von etwa 75 cm² bis etwa 150 cm² pro Gramm aufweisen.

10. Elektrochemische Zelle nach einem der vorstehenden Ansprüche, wobei die Anode ferner Zinkpulver aufweist.

11. Elektrochemische Zelle nach Anspruch 10, wobei die Zinkflocken etwa 5 bis etwa 70 Gew.-%, vorzugsweise etwa 5 bis etwa 30 Gew.-% des kombinierten Gesamtgewichts der Zinkflocken und des Zinkpulvers ausmachen.

12. Elektrochemische Zelle nach einem der vorstehenden Ansprüche, wobei die elektrochemische Zelle einen alkalischen Elektrolyten aufweist.

13. Elektrochemische Zelle nach einem der vorstehenden Ansprüche, wobei die Anode eine Zinkkonzentration von weniger als 28 Vol.-%, vorzugsweise von weniger als 27 Vol.-% aufweist.

14. Elektrochemische Zelle nach Anspruch 13, wobei die Zelle eine alkalische Zelle der Größe "AA" ist und in einem Raum mit 21°C bei einer Spannung von 0,90 Volt mindestens 10 Minuten lang einen konstanten Strom von 2000 mA liefert.

15. Elektrochemische Zelle nach Anspruch 1, wobei der auf das Anodenvolumen bezogene Zinkgehalt in der Anode etwa 0,36 g/cm³ bis etwa 1,56 g/cm³ Zink beträgt.

## Revendications

1. Cellule électrochimique contenant une anode sans mercure comprenant des flocons de zinc non compactés, les flocons de zinc présentant des dimensions d'épaisseur, de longueur et de largeur, la dimension d'épaisseur étant au moins 10 fois plus petite que les dimensions de longueur et de largeur, les flocons de zinc possédant une surface spécifique moyenne d'environ 30 cm² à environ 150 cm² par gramme.

2. Cellule électrochimique suivant la revendication 1, dans laquelle les flocons de zinc sont incorporés uniformément dans l'anode.

3. Cellule électrochimique suivant l'une quelconque des revendications précédentes, dans laquelle les flocons de zinc sont dispersés de manière homogène dans l'anode.

4. Cellule électrochimique suivant l'une quelconque des revendications précédentes, dans laquelle les flocons de zinc sont dispersés de manière homogène dans un volume d'anode concentré.

5. Cellule électrochimique suivant l'une quelconque des revendications précédentes, dans laquelle les flocons de zinc sont formés à partir de zinc pur.

6. Cellule électrochimique suivant l'une quelconque des revendications 1 à 4, dans laquelle les flocons de zinc sont formés à partir d'un alliage de zinc.

7. Cellule électrochimique suivant la revendication 6, dans laquelle l'alliage de zinc comprend un ou plusieurs des métaux choisis parmi l'indium, le bismuth, le lithium, le calcium et l'aluminium.

8. Cellule électrochimique suivant l'une quelconque des revendications précédentes, dans laquelle les flocons de zinc sont enrobés ou présentent un dépôt de surface avec de l'indium.

9. Cellule électrochimique suivant l'une quelconque des revendications précédentes, dans laquelle les flocons de zinc possèdent une surface spécifique moyenne d'environ 75 cm² à environ 150 cm² par gramme.

10. Cellule électrochimique suivant l'une quelconque des revendications précédentes, dans laquelle l'anode comprend en outre une poudre de zinc.

11. Cellule électrochimique suivant la revendication 10, dans laquelle les flocons de zinc comprennent d'environ 5 à environ 70 pour-cent en poids, de préférence d'environ 5 à environ 30 pour-cent en poids, du poids total combiné des flocons de zinc et de la poudre de zinc.

12. Cellule électrochimique suivant l'une quelconque des revendications précédentes, dans laquelle la cellule électrochimique comprend un électrolyte alcalin.

13. Cellule électrochimique suivant l'une quelconque des revendications précédentes, dans laquelle l'anode possède une concentration de zinc inférieure à 28 pour-cent en volume, de préférence inférieure à 27 pour-cent en volume.

14. Cellule électrochimique suivant la revendication 13, dans laquelle la cellule est une pile alcaline de taille « AA » et la pile démontre au moins 10 minutes de courant constant de 2000 milliampères dans un espace de 21°C à 0,90 volts.

15. Cellule électrochimique suivant la revendication 1, dans laquelle la teneur en zinc dans l'anode est comprise entre environ 0,36 grammes par cc et environ 1,56 grammes par cc, de zinc pour un volume d'anode.
